# EUROPEAN PATENT SPECIFICATION

(11) **EP 3 692 781 B1**
(45) Date of publication and mention of the grant of the patent: **17.02.2021**
(21) Application number: 19214357.6
(22) Date of filing: 09.12.2019
(51) Int. Cl.: A01F 15/08, A01F 15/07

(54) **BALE WRAPPER AND COMBINATION MACHINE**
BALLENWICKELMASCHINE UND KOMBINATIONSMASCHINE
ENRUBANNEUSE ET MACHINE COMBINÉE

(30) Priority: 14.12.2018 FI 20186079
(43) Date of publication of application: 12.08.2020
(73) Proprietor: Agronic Oy, 86600 Haapavesi (FI)
(72) Inventor: KURONEN, Urpo, 86600 Haapavesi (FI)
(74) Representative: Berggren Oy, Helsinki & Oulu

(56) References cited:
- EP-A1- 1 731 023
- EP-A1- 2 149 293
- EP-A1- 3 143 867
- EP-A2- 1 210 862
- WO-A1-2010/137968
- DE-A1- 4 120 733
- US-A- 5 385 001

## Description

The invention relates to a bale wrapper, which has a frame, a wrapping table which is moveable in relation to the frame, which wrapping table has a front edge and a rear edge, over which rear edge a wrapped bale is arranged to roll off the wrapping table, and which frame comprises at least one support rail, which has a longitudinal direction, and the wrapping table has first support members, with which the wrapping table is supported to said support rail to be moveable in the longitudinal direction of the support rail, a receiving station, whereto the wrapping table can be moved to receive a bale, a wrapping station, whereto the wrapping table can be moved for the duration of the wrapping of a protective film, an actuator for moving the wrapping table between the receiving station and the wrapping station and a wrapping device for wrapping a protective film around the bale. The invention further relates to a combination machine, which comprises a bale wrapper according to the invention.

Feed plants and hay are often stored as round bales. Combination machines hauled behind a tractor are used in baling, which lift a feed mattress on the field into a baling chamber in the device by using a picking roll and form a cylindrical bale as the baler moves. From the baling chamber the round bale is transferred to a bale wrapping device, in which an air- and water-tight protective film of plastic is tightly wrapped around the bale. The bale wrapper can also be a separate device, with which bales produced with a separate baler are wrapped in protective film.

In known combination machines the wrapping device is placed in the rear part of the device and the baling chamber in the front part of the device. The round bale is transferred from the baling chamber along a conveyor onto a separate wrapping table belonging to the bale wrapping device. The wrapping table typically comprises two parallel support rolls, on which the bale in a horizontal position is rotated around its longitudinal axis. Simultaneously with the rotating of the bale, a stretchable protective film is wrapped around the bale with the aid of the wrapping device. After the wrapping of the protective film, the wrapping table is tilted so that the bale wrapped in the protective film rolls from the wrapping table to the field, where it is left to wait for transportation to storage or a site of use.

In documents EP 0865723 B1 and EP 1438889 B1 combination machines with a movable wrapping table are disclosed, which wrapping table can move on guide tracks between the receiving station of the baling chamber and the wrapping station of the bale wrapping device. A typical problem with moving wrapping tables is their slow-motion speed, which causes delays for the operation of the device. In document EP 0865723 B1 the wrapping table is moved by a chain-driven mechanism, and in document EP 1438889 B1 it is moved by several separate hydraulic cylinders. Guide tracks and chain-driven mechanisms are susceptible to malfunctions, especially in wet and muddy operating environments. The above-mentioned transfer mechanisms are also structurally complex, and their manufacturing costs are high.

Document DE 20015653 U1 discloses a wrapping apparatus for round bales, which comprises a frame and a wrapping table suspended on the frame by means of L-shaped support arms. The massive frame belonging to the bale wrapping apparatus requires such a large space that it is difficult to arrange the apparatus for example in a moving combination machine.

An object of the invention is to provide a bale wrapper and a combination machine, with which drawbacks and defects relating to the prior art can be reduced.

The objects of the invention are obtained with a bale wrapper and a combination machine, which are characterized in what is presented in the independent claims. Some advantageous embodiments of the invention are presented in the dependent claims.

The object of the invention is a bale wrapper, which has a frame and a wrapping table, which is moveable in relation to the frame. The wrapping table has a front edge and a rear edge, over which rear edge the wrapped bale is arranged to roll off the wrapping table. The frame comprises at least one support rail, which has a longitudinal direction. The wrapping table has first support members, with which the wrapping table is supported to said support rail to be moveable in the longitudinal direction of the support rail, a receiving station, whereto the wrapping table can be moved to receive a bale, a wrapping station, whereto the wrapping table can be moved for the duration of the wrapping of the protective film, an actuator for moving the wrapping table between the receiving station and the wrapping station and a wrapping device for wrapping protective film around the bale. The wrapping table is supported by its front edge to the frame with at least one rocker. Advantageously, the support rail has a support surface substantially in the longitudinal direction of the support rail and the first support members comprise support wheels moving along the support surface of the support rail.

One advantageous embodiment of the bale wrapper according to the invention comprises two parallel rockers and the wrapping table is attached in an articulated manner to the first rocker and second rocker.

In a second advantageous embodiment of the bale wrapper according to the invention the rockers are L-shaped parts, which have a first end attaching to the frame and a second end attaching to the wrapping table.

A third advantageous embodiment of the bale wrapper according to the invention comprises two parallel support rails and the wrapping table has a first side edge, by which it is supported on the first support rail, and a second side edge, by which it is supported on the second support rail.

In still another advantageous embodiment of the bale wrapper according to the invention, the first support members are located between the front edge and rear edge, at a distance from the rear edge.

In still another advantageous embodiment of the bale wrapper according to the invention, said actuator for moving the wrapping table between the receiving station and the wrapping station is arranged to turn the rockers. Said actuator is advantageously a hydraulic cylinder, which is attached by its first end to the frame and by its second end to the rocker.

In still another advantageous embodiment of the bale wrapper according to the invention, the rockers can be brought into a first position, whereby the wrapping table is at the receiving station, and into a second position, whereby the wrapping table is at the wrapping station.

In still another advantageous embodiment of the bale wrapper according to the invention, the wrapping table can be brought into a discharge position, where the front edge of the wrapping table is in the vertical direction substantially higher than the rear edge, when the bale wrapper is in the common use position.

In still another advantageous embodiment of the bale wrapper according to the invention, the shape of the support surface in the longitudinal direction of the support rail is not straight. Said support surface advantageously comprises a section, which is substantially the same shape as the shape of the movement path of the second end of the rocker.

In still another advantageous embodiment of the bale wrapper according to the invention, the wrapping table further has second support members, by means of which the wrapping table is supported on said support rails to be moveable in the longitudinal direction of the support rails, which second support members comprise support wheels moving along the support surface of the support rail.

In still another advantageous embodiment of the bale wrapper according to the invention, there is a pivot pin in the front edge of the wrapping table, and there is an elongated slot in the second end of the rocker attaching to the wrapping table, in which slot the pivot pin is fitted to move. Due to the attaching between the wrapping table and the rocker, implemented with the aid of an elongated slot and pivot pin moving in the slot, the curved movement path of the second end of the rocker does not affect the vertical position of the front edge of the wrapping table, but the wrapping table can move supported by the first and second support members along the straight support surface.

In still another advantageous embodiment of the bale wrapper according to the invention, the slot has a first end and a second end, so that the first end is in the vertical direction lower than the second end, when the rocker is in the second position. The pivot pin in the front edge of the wrapping table thus by means of gravity of the wrapping table strives to move all the way to the first end of the slot, when the rocker is in the second position. The slot advantageously has a curved shape. The section of the rocker comprising the slot can also have a curved shape in the same way as the slot.

The combination machine according to the invention comprises a baling chamber for forming a bale and a bale wrapper for wrapping a protective film around the formed bale. The bale wrapper is some bale wrapper according to the description above.

It is an advantage of the bale wrapper according to the invention that it is structurally simple and functionally reliable. Due to the simple structure, savings are generated in the manufacturing and maintenance costs of the bale wrapper.

In the following, the invention will be described in detail by means of the appended drawings, in which
figure 1a shows as an example a bale wrapper according to the invention seen from the side,
figure 1b shows the bale wrapper shown in figure 1a seen from behind,
figures 1c, 1d and 1e show the bale wrapper shown in figures 1a and 1b seen from the side,
figure 2 shows as an example an advantageous embodiment of the bale wrapper according to the invention seen from the side,
figures 3a, 3b, 3c and 3d show an advantageous embodiment of the bale wrapper according to the invention seen from the side and
figure 4 shows as an example a combination machine according to the invention seen from the side.

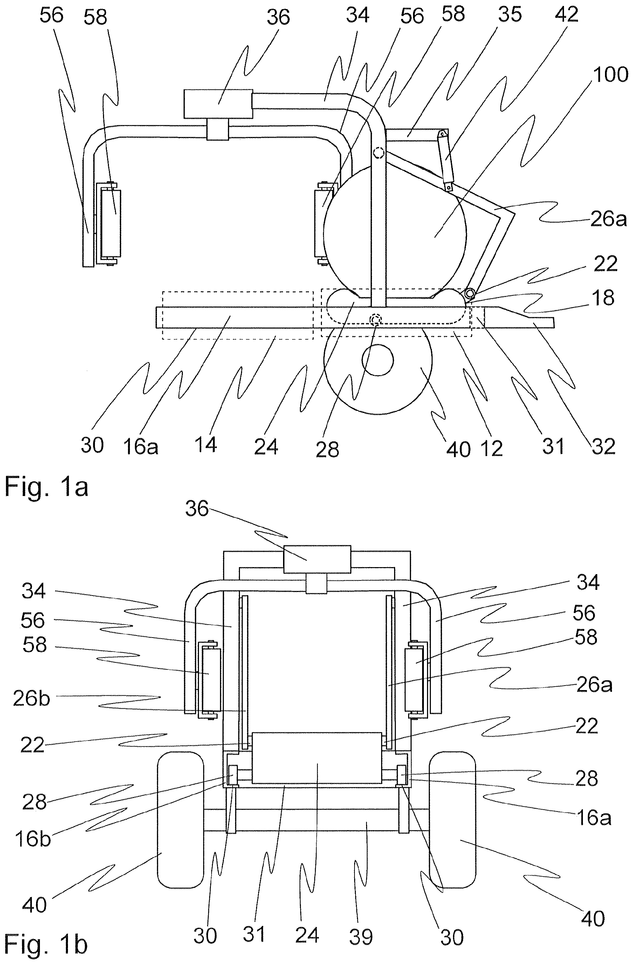

Figures 1a and 1b show as an example a bale wrapper according to the invention. Figure 1a shows the bale wrapper seen from the side and figure 1b seen from behind. In the following both figures are described simultaneously.

The bale wrapper has two adjacent, substantially parallel support rails 16a, 16b, which are connected by one end to a tow bar 32 by means of a connecting beam 31 which is transverse to the longitudinal direction of the support rails. The support rails are U-profiles manufactured from steel, the trough-like surfaces of which open toward each other (figure 1b). On one edge surface of both support rails has been attached an L-shaped support post 34, so that the first point of the support post is attached by its end to the support rail in a substantially perpendicular position to the support rail, and the second points of the support posts are connected by their ends to each other. The support rails, the connecting beam connecting them and the support posts form the frame of the bale wrapper. In the junction point between the second points of the support posts there is a motor 36, to which two L-shaped wrapping arms 56 have been attached in a rotating manner, the free ends of which wrapping arms point substantially vertically down. The wrapping arms have brackets, whereto protective film rolls 58 are attached. In the centre of the circular movement path of the wrapping arms is a wrapping station 14 (figure 1a), where the wrapping table 24 is stationed for the duration of the wrapping of the bale 100 resting on the wrapping table in protective film.

The wrapping table 24 belonging to the bale wrapper is a device known as such, which comprises two parallel support rolls, a continuous belt rotating around the support rolls and a motor rotating one of the support rolls. By using the motor, the bale on the wrapping table can be made to rotate around its horizontal axis at the same time as protective film rolls rotate around the bale around the vertical rotational axis. Thus, protective film is wrapped evenly on the outer surface of the bale.

The wrapping table 24 is suspended on two L-shaped rockers 26a, 26b to the support posts 34, so that the rockers are attached by their first end with a pivot pin to the support post and by their second end to the front edge 18 of the wrapping table. The rockers are situated outside the plane defined by the side edges of the wrapping table, so that the wrapping table is left between the rockers. In the front edge of the wrapping table there are pin-like suspension members 22, to which the second ends of the rockers attach. The wrapping table is additionally supported with two support members in the shape of support wheels 28 to the support rails 16a, 16a. The support wheels are attached on an axis on both sides of the wrapping table, so that the first support wheel is on the first side of the wrapping table 24 and the second support wheel is on the second side of the wrapping table. The support wheels are situated inside the trough-like parts of the support rails, so that they can roll along the inner surface of the flange of the support rail. The surface of the flange of the support rail 16a, 16b forms a support surface 30, along which the wrapping table can move in the longitudinal direction of the support rail.

The bale wrapper additionally comprises an axis 39, both ends of which have a wheel 40. The axis is attached to the lower surface of the support rails 16a, 16b. Due to the wheels, the bale wrapper can be moved by pulling along a surface. In figure 1a one of the wheels is removed in order to better bring out the structure of the bale wrapper.

The wrapping table 24 of the bale wrapper shown in figure 1a is in a first extreme position of its movement path, between the support posts 34 close to the tow bar 32. This position of the wrapping table is in this presentation called the receiving station 12. The wrapping table is moved to the receiving station, when a new bale 100 to be wrapped in protective film is placed on the wrapping table. Moving of the wrapping table occurs by turning the rockers into the first position shown in figure 1a, whereby the rockers pull the wrapping table along the support rails to the receiving station. For changing the position of the rockers, the bale wrapper has a dual-purpose hydraulic cylinder 42, changing the length of which makes the rocker rotate around the attaching point of the first end. The frame of the hydraulic cylinder is attached to the end of an overhang 35 in the support post 34, and the piston rod end is attached to the rocker. When the turning table is at the receiving station, the hydraulic cylinder is in its shortest position. The hydraulic cylinder can advantageously be connected with hydraulic hoses to the hydraulic system of the work machine towing the bale wrapper.

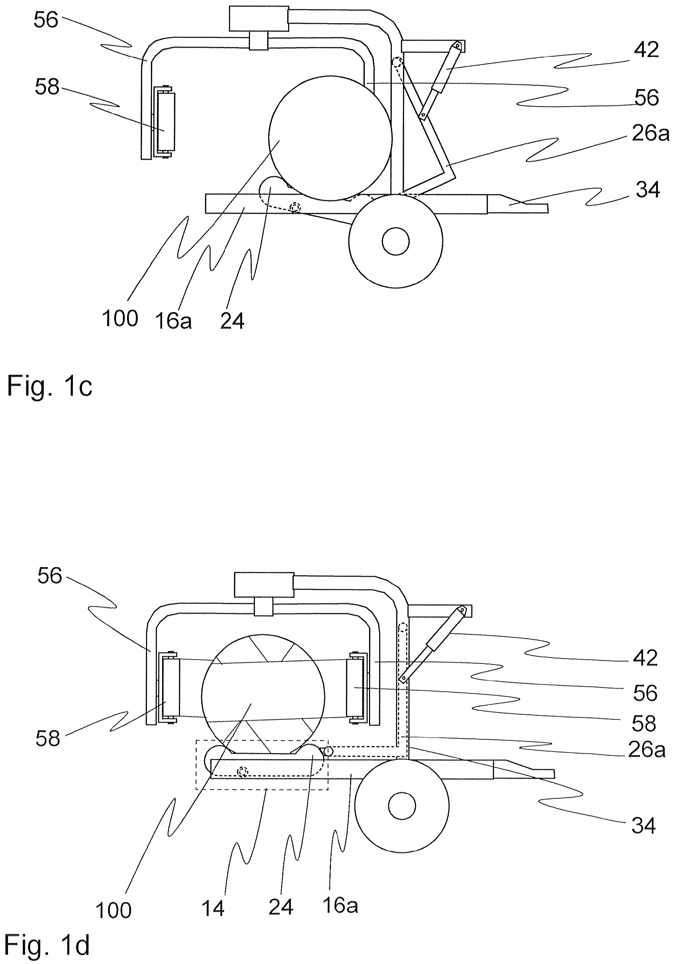

Figures 1c and 1d show by means of a series of drawings the movement of the wrapping table from the receiving station shown in figure 1a to the wrapping station 14. Figures 1c and 1d show the bale wrapper shown in figure 1a at different stages of the movement path of the wrapping table. In the following both figures are described simultaneously.

When the bale 100 has been brought onto the wrapping table 24 at the receiving station, the rockers 26a are rotated clockwise by lengthening the hydraulic cylinder 42, whereby the wrapping table starts to move toward the wrapping station. During the movement of the wrapping table, it is supported by its front edge on the rockers and via the support wheels 28 on the support rails 16a. While the wrapping table moves, the support wheels roll along the support surface of the support rails. The rockers 26a are turned into the second position according to figure 1d, where the first point of the rockers is substantially in the direction of the support post 34 and the second point of the rocker is substantially in the direction of the support rail 16a. Simultaneously, the wrapping table 24 moves via the intermediate station shown in figure 1c to the wrapping station 14 shown in figure 1d. Protective film is wrapped around the bale at the wrapping station by rotating the wrapping arms 56 carrying protective film rolls 58 around the bale. Simultaneously with the rotating of the wrapping arms, the bale on the wrapping table is rotated around its central axis by rotating the wrapping table belt with the motor, on which belt the bale rests.

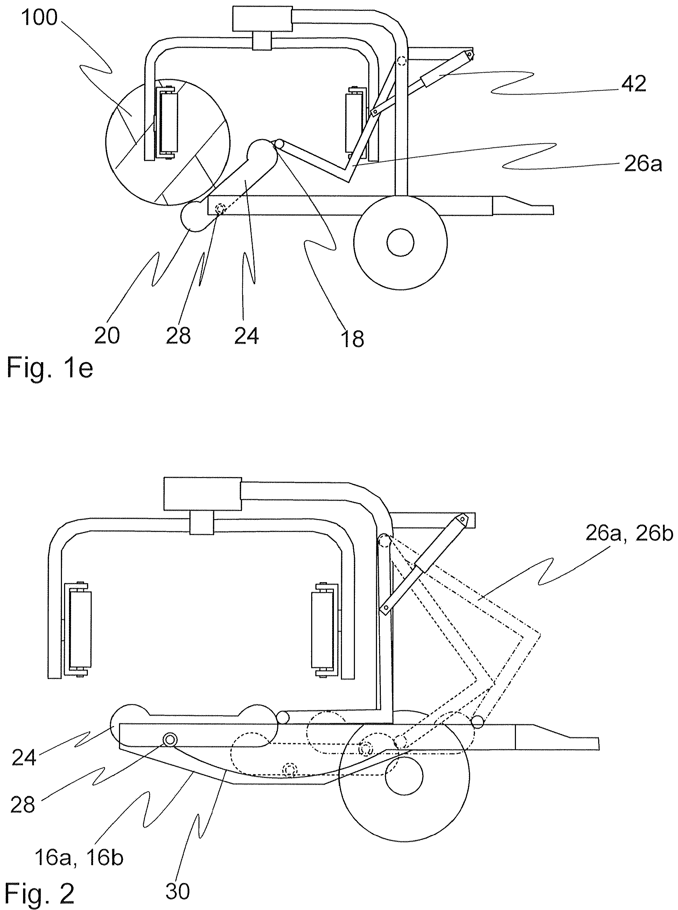

Figure 1e shows the bale wrapper shown in figures 1a-1d seen from the side. The figure shows a situation, where the protective film is wrapped in place around the bale 100 and the bale is removed from the wrapping table 24. Removing the bale occurs by tilting the wrapping table 24 into the discharge position according to figure 1e. The wrapping table is set in the discharge position by increasing the length of the hydraulic cylinder 42, whereby the rockers 26a rotate so that the ends of their second points rise upwards. Thus, the wrapping table is rotated around the attaching axis of the support wheels 28 into the discharge position, where the front edge 18 of the wrapping table is substantially higher than the rear edge 20 of the wrapping table. The bale 100 wrapped in protective film thus rolls over the rear edge of the wrapping table off the wrapping table. When the bale has left the wrapping table, the hydraulic cylinder 42 is brought back to its shortest length, whereby the wrapping table moves via the intermediate station to the receiving station.

Figure 2 shows as an example an advantageous embodiment of the bale wrapper according to the invention as seen from the side. This embodiment of the invention comprises all the same structural parts as the bale wrapper described in figures 1a-1e. The embodiment of figure 2 differs from the invention described above with regards to the shape and structure of the support rails 16a, 16b. In figure 2 the width of the web of the support rails varies in the longitudinal direction of the support rail, so that the width of the support rail is the largest in the central area of the length of the rail. A metal strip is attached to the inner surface of the web of the support rail, the upper surface of which metal strip forms a support surface 30, along which the support wheels 28 roll when the wrapping table 24 moves between the receiving station and the wrapping station. The support surface comprises a curved section, the shape of which is substantially the same as the shape of the movement path of the end of the second point of the rocker 26a, 26b when the rocker moves from the first position shown in the figure with dotted lines to the second position shown in the figure with a solid line. Due to the curved shape of the support surface, the wrapping table 24 always stays in a substantially horizontal position during the movement of the wrapping table, which aids the bale staying on the wrapping table.

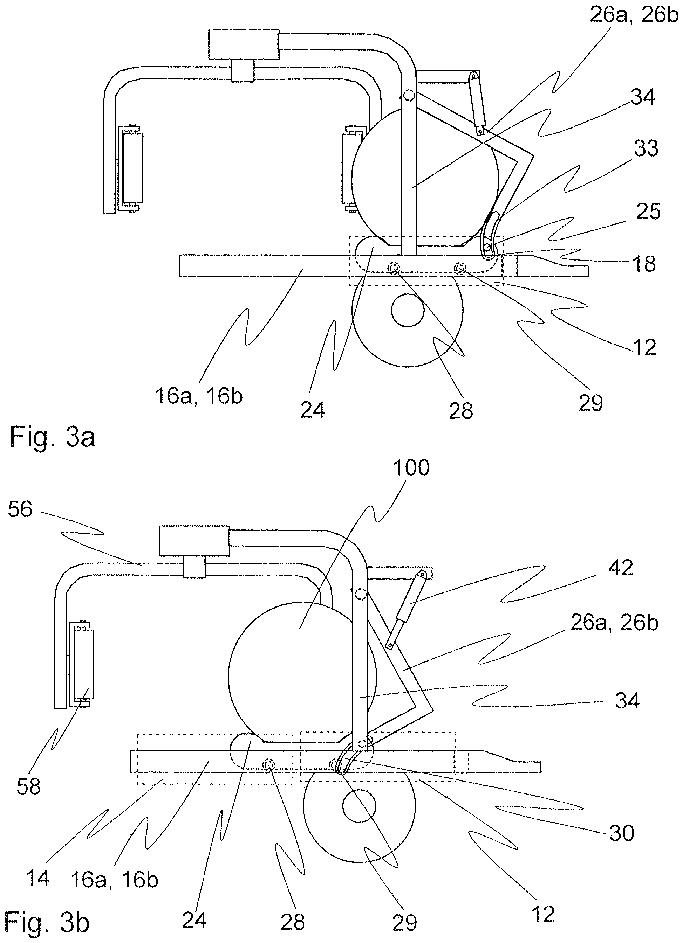

Figure 3a shows as an example a second advantageous embodiment of the bale wrapper according to the invention as seen from the side. This embodiment of the invention comprises all the same structural parts as the bale wrapper described in figures 1a-1e. The embodiment shown in figure 3a has two parallel support rails 16a, 16b, which have a substantially straight support surface. Only the first support rail 16a is visible in figure 3a, while the second support rail 16b is left invisible behind it. The wrapping table has, in addition to the first support members 28, second support members 29, supported by which the wrapping table can move along the support rails 16a, 16b. The second support members are the same as the first support members, i.e. they comprise support wheels moving along the support surface of the support rails. The second support members are situated closer to the front edge 18 of the wrapping table than the first support members, when seen in the longitudinal direction of the wrapping table. The wrapping table is thus supported with one first support member 28 and one second support member 29 to the first support rail 16a and with one first support member 28 and one second support member 29 to the second support rail 16b. Alternatively, the wrapping table can be supported to one support rail with one first support member and one second support member and to a second support rail with only one support member, which is placed substantially in the centre of the wrapping table in the longitudinal direction of the wrapping table. An advantage of such a wrapping table implemented with three support members is that possible shape errors of the wrapping table and support rails have less of an effect on the movement of the wrapping table along its movement path.

The embodiment shown in figure 3a additionally differs from the invention described above with regards to the shape and structure of the rockers 26a, 26b and with regards to the attachment between the wrapping table 24 and the rockers. The second ends of the rockers 26a, 26b, which ends attach to the wrapping table, have an elongated slot 33 with a curved shape. The slot has a first end closer to the rocker end and a second end closer to the corner point of the rocker. On both side edges of the wrapping table, very close to the front edge of the wrapping table, there is a pivot pin 25, the free end of which extends through the slot. In figure 3a the rockers are in their first position, whereby the wrapping table is at the receiving station 12. There can be two rockers, one on each side of the wrapping table, or only one, which is attached to only one of the support posts 34.

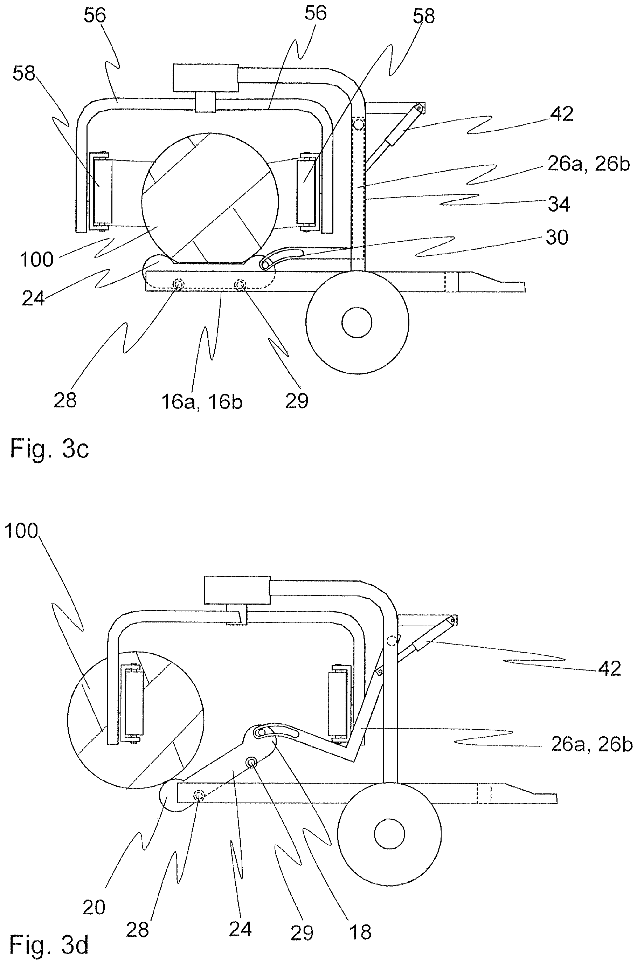

Figures 3b and 3c show by means of a series of drawings the movement of the wrapping table 24 from the receiving station 12 shown in figure 3a to the wrapping station 14. Figures 3b and 3c show the bale wrapper shown in figure 3a at different stages of the movement path of the wrapping table. In the following both figures are described simultaneously.

When the bale 100 has been brought onto the wrapping table 24 at the receiving station, the rockers 26a, 26b are rotated clockwise by lengthening the hydraulic cylinder 42, whereby the wrapping table starts to move toward the wrapping station, pushed by the rockers. During the movement of the wrapping table it is supported via the first support members 28 and second support members 29 on the support rails 16a, 16b. While the wrapping table moves, the support wheels of the support members roll along the straight support surface of the support rails 16a. During the rotational movement of the rockers, the pivot pins attached to the front edge of the wrapping table move in the slot 30 in the longitudinal direction of the slot. The rockers 26a are turned into the second position according to figure 3c, where the first point of the rockers is substantially in the direction of the support post 34 and the second point of the rocker is substantially in the direction of the support rail 16a. Simultaneously, the wrapping table 24 moves via the intermediate station shown in figure 3b to the wrapping station shown in figure 3c. Protective film is wrapped around the bale at the wrapping station by rotating the wrapping arms 56 carrying protective film rolls 58 around the bale. Simultaneously with the rotating of the wrapping arms, the bale on the wrapping table is rotated around its central axis by rotating the wrapping table belt with the motor, on which belt the bale rests.

Figure 3d shows a situation, where the protective film is wrapped in place around the bale 100 and the bale is removed from the wrapping table 24. Removing the bale occurs by tilting the wrapping table 24 into the discharge position according to figure 3d. The wrapping table is set in the discharge position by increasing the length of the hydraulic cylinder 42, whereby the rockers 26a rotate so that the ends of their second points rise upwards. Thus, the wrapping table is rotated around the attaching axis of the first support members 28 into the discharge position, where the front edge 18 of the wrapping table is substantially higher than the rear edge 20 of the wrapping table. The structure of the upper edge of the support rails is such that it makes possible the rising of the support wheels of the second support members 29 above the level of the upper surface of the support rails. The bale 100 wrapped in protective film thus rolls over the rear edge of the wrapping table off the wrapping table. When the bale has left the wrapping table, the hydraulic cylinder 42 is brought back to its shortest length, whereby the wrapping table moves via the intermediate station to the receiving station.

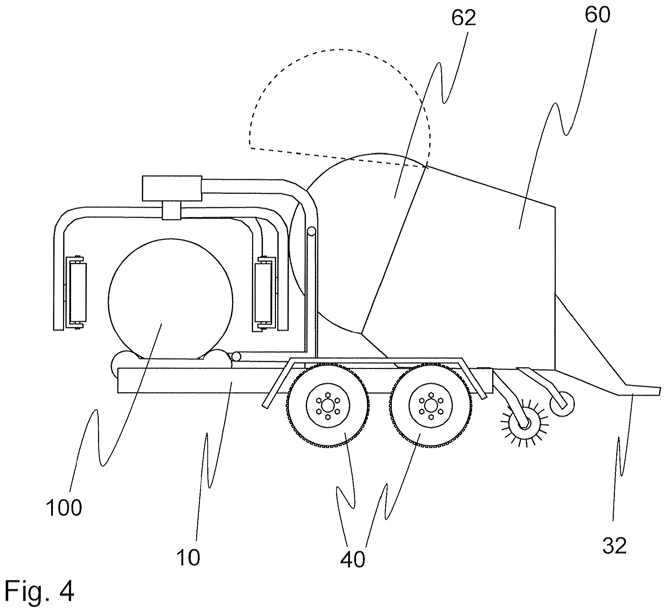

In Figure 4 is shown as an example a combination machine according to the invention seen from the side. The combination machine is equipped with a bale wrapper according to the invention. The combination machine has an elongated frame 10 constructed of beam-like parts, to which frame is attached two axes, at the ends of which there are wheels 40. In the first end of the frame there is a tow bar 32, which has a towing loop for attaching to a work machine or towing vehicle. In the first end of the frame there is additionally a baling chamber 60, in the edge toward the tow bar of which there are means with which the material to be baled is collected from a field and led into the baling chamber. Inside the baling chamber there are baling means, by means of which the baler forms a round bale from the material to be baled, such as feed plants or hay, which has been fed into the baling chamber. The baling chamber comprises a front part attached to the frame 10 in a fixed manner and a rear wall 62 which can be opened, which rear wall is attached on hinges by its upper edge to the upper edge of the front part. The rear wall can be turned into an open position shown in the figure with dotted lines, whereby the bale 100 formed in the baling chamber can roll outside the baling chamber to the bale receiving station. The baling means belonging to the baling chamber are prior art known as such, which is not described in further detail in this context.

The bale wrapper according to the invention can be constructed onto a combination machine frame after a baling chamber or alternatively the baling chamber can be fitted onto the frame of the bale wrapper. The combination machine does thus not have two separate frames, but the baling chamber and bale wrapper are supported on the same frame.

The bale wrapper shown in an exemplary manner in the embodiments above comprises vertical wrapping arms, which rotate around the bale rotating around a horizontal axis. For a person skilled in the art it is clear that bale wrappers with different structures and operating principles can also be used in the bale wrapper according to the invention. For example, the bale wrapping device can have a prior art wrapping table, which brings the bale resting on it to rotate both around a vertical and a horizontal axis. Thus, the protective film rolls can be attached in place to the frame of the device.

Some advantageous embodiments of the bale wrapper and combination machine according to the invention have been described above. The invention is not limited to the solutions described above, but the inventive idea can be applied in different ways within the scope of the claims.

## Claims

1. A bale wrapper, which has a frame, a wrapping table (24) which is moveable in relation to the frame, which wrapping table (24) has a front edge (18) and a rear edge (20), over which rear edge a wrapped bale (100) is arranged to roll off the wrapping table, and which frame comprises at least one support rail (16a, 16b), which has a longitudinal direction, and the wrapping table (14) has first support members (28), with which the wrapping table (24) is supported to said support rail (16a, 16b) to be moveable in the longitudinal direction of the support rail, a receiving station (12), whereto the wrapping table (24) can be moved to receive a bale (100), a wrapping station (14), whereto the wrapping table (24) can be moved for the duration of the wrapping of a protective film, an actuator configured to move the wrapping table (24) between the receiving station (12) and the wrapping station (14) and a wrapping device (50) configured to wrap a protective film around the bale (100), **characterized in that** said wrapping table (24) is supported by its front edge (18) to the frame with at least one rocker (26a, 26b).

2. The bale wrapper according to claim 1, **characterized in that** the support rail (16a, 16b) has a support surface (30) substantially in the longitudinal direction of the support rail (16a, 16b) and the first support members (28) comprise support wheels moving along the support surface (30) of the support rail (16a, 16b).

3. The bale wrapper according to claim 1 or 2, **characterized in that** it comprises two parallel rockers (26a, 26b) and the wrapping table (24) is attached in an articulated manner to the first rocker (26a) and the second rocker (26b).

4. The bale wrapper according to any of the claims 1-3, **characterized in that** the rockers (26a, 26b) are L-shaped parts, which have a first end attaching to the frame (10) and a second end attaching to the wrapping table (24).

5. The bale wrapper according to any of the claims 1-4, **characterized in that** it comprises two parallel support rails (16a, 16b) and the wrapping table (24) has a first side edge, by which it is supported on the first support rail (16a), and a second side edge, by which it is supported on the second support rail (16b).

6. The bale wrapper according to any of the claims 1-5, **characterized in that** the first support members (28) are between the front edge (18) and the rear edge (20), at a distance from the rear edge (20).

7. The bale wrapper according to any of the claims 1-6, **characterized in that** said actuator configured to move the wrapping table (24) between the receiving station (12) and the wrapping station (14) is arranged to turn the rockers (26a, 26b).

8. The bale wrapper according to claim 7, **characterized in that** said actuator is a hydraulic cylinder (42), which is attached by its first end to the frame (10) and by its second end to the rocker (26a, 26b).

9. The bale wrapper according to claim 1-8, **characterized in that** the rockers (26a, 26b) can be brought into a first position, whereby the wrapping table (24) is at the receiving station (12), and into a second position, whereby the wrapping table (24) is at the wrapping station (14).

10. The bale wrapper according to any of the claims 1-9, **characterized in that** the wrapping table (24) can be brought into a discharge position, where the front edge (18) of the wrapping table (24) is in the vertical direction substantially higher than the rear edge (20), when the bale wrapper is in the common use position.

11. The bale wrapper according to any of the claims 2-10, **characterized in that** the shape of the support surface (30) in the longitudinal direction of the support rail (16a, 16b) is not straight.

12. The bale wrapper according to claim 11, **characterized in that** said support surface (30) comprises a section, which substantially has the same shape as the shape of the movement path of the second end of the rocker (26a, 26b).

13. The bale wrapper according to any of the claims 5-10, **characterized in that** its wrapping table (24) further has second support members (29), by means of which the wrapping table (24) is supported on said support rails (16a, 16b) to be moveable in the longitudinal direction of the support rails, which second support members (29) comprise support wheels moving along the support surface (30) of the support rail (16a, 16b).

14. The bale wrapper according to claim 13, **characterized in that** there is a pivot pin (25) in the front edge (18) of the wrapping table (24), and there is an elongated slot (33) in the second end of the rocker (26a, 26b) attaching to the wrapping table (24), in which slot the pivot pin (25) is fitted to move.

15. The bale wrapper according to claim 14, **characterized in that** the slot (33) has a first end and a second end, so that the first end is in the vertical direction lower than the second end, when the rocker (26a, 26b) is in the second position.

16. The bale wrapper according to claim 14 or 15, **characterized in that** the slot (33) has a curved shape.

17. A combination machine, which comprises a baling chamber (60) for forming a bale (100) and a bale wrapper for wrapping a protective film around the formed bale (100), **characterized in that** the bale wrapper is a bale wrapper according to claims 1-16.

## Patentansprüche

1. Ballenwickelvorrichtung, die einen Rahmen, einen Wickeltisch (24) aufweist, der in Bezug auf den Rahmen beweglich ist, wobei der Wickeltisch (24) eine Vorderkante (18) und eine Hinterkante (20) aufweist, wobei über die Hinterkante ein gewickelter Ballen (100) angeordnet ist, um vom Wickeltisch abzurollen, und wobei der Rahmen mindestens eine Stützschiene (16a, 16b) umfasst, die eine Längsrichtung aufweist, und der Wickeltisch (14) Folgendes aufweist: erste Stützelemente (28), mit denen der Wickeltisch (24) an der Stützschiene (16a, 16b) gelagert ist, um in der Längsrichtung der Stützschiene beweglich zu sein, eine Empfangsstation (12), zu der der Wickeltisch (24) bewegt werden kann, um einen Ballen (100) aufzunehmen, eine Wickelstation (14), zu der der Wickeltisch (24) für die Dauer des Wickelns einer Schutzfolie bewegt werden kann, einen Aktuator, der konfiguriert ist, um den Wickeltisch (24) zwischen der Empfangsstation (12) und der Wickelstation (14) zu bewegen und ein Wickelgerät (50), das konfiguriert ist, um eine Schutzfolie um den Ballen (100) zu wickeln, **dadurch gekennzeichnet, dass** der Wickeltisch (24) durch seine Vorderkante (18) mit mindestens einer Schwinge (26a, 26b) am Rahmen abgestützt ist.

2. Ballenwickelvorrichtung nach Anspruch 1, **dadurch gekennzeichnet, dass** die Stützschiene (16a, 16b) eine Stützfläche (30) im Wesentlichen in Längsrichtung der Stützschiene (16a, 16b) und der ersten Stützelemente (28) aufweist. Stützräder umfassen, die sich entlang der Stützfläche (30) der Stützschiene (16a, 16b) bewegen.

3. Ballenwickelvorrichtung nach Anspruch 1 oder 2, **dadurch gekennzeichnet, dass** sie zwei parallele Schwingen (26a, 26b) umfasst, und der Wickeltisch (24) in artikulierter Weise an der ersten Schwinge (26a) und der zweiten Schwinge (26b) angebracht ist.

4. Ballenwickelvorrichtung nach einem der Ansprüche 1 bis 3 ist **dadurch gekennzeichnet, dass** die Schwingen (26a, 26b) L-förmige Teile sind, die ein am Rahmen (10) befestigtes erstes Ende und ein am Wickeltisch (24) befestigtes zweites Ende aufweisen.

5. Ballenwickelvorrichtung nach einem der Ansprüche 1 bis 4, **gekennzeichnet dadurch, dass** sie zwei parallele Stützschienen (16a, 16b) umfasst, und der Wickeltisch (24) eine erste Seitenkante, durch die er auf der ersten Stützschiene (16a) getragen wird, und eine zweite Seitenkante, durch die er auf der zweiten Stützschiene (16b) getragen wird, aufweist.

6. Ballenwickelvorrichtung nach einem der Ansprüche 1 bis 5, **dadurch gekennzeichnet, dass** sich die ersten Stützelemente (28) zwischen der Vorderkante (18) und der Hinterkante (20) in einem Abstand von der Hinterkante (20) befinden.

7. Ballenwickelvorrichtung nach einem der Ansprüche 1 bis 6, **dadurch gekennzeichnet, dass** der Aktuator, der konfiguriert ist, um den Wickeltisch (24) zwischen der Empfangsstation (12) und der Wickelstation (14) zu bewegen, angeordnet ist, um die Schwingen (26a, 26b) zu drehen.

8. Ballenwickelvorrichtung nach Anspruch 7, **dadurch gekennzeichnet, dass** der Aktuator ein Hydraulikzylinder (42) ist, der an seinem ersten Ende am Rahmen (10) und an seinem zweiten Ende an der Schwinge (26a, 26b) befestigt ist.

9. Ballenwickelvorrichtung nach Anspruch 1 bis 8, **dadurch gekennzeichnet, dass** die Schwingen (26a, 26b) in eine erste Position gebracht werden können, wobei sich der Wickeltisch (24) an der Empfangsstation (12) befindet, und in eine zweite Position, wobei sich der Wickeltisch (24) an der Wickelstation (14) befindet.

10. Ballenwickelvorrichtung nach einem der Ansprüche 1 bis 9, **dadurch gekennzeichnet, dass** der Wickeltisch (24) in eine Entladeposition gebracht werden kann, in der sich die Vorderkante (18) des Wickeltisches (24) in der vertikalen Richtung wesentlich höher als die Hinterkante (20) ist, wenn sich die Ballenwickelvorrichtung in der allgemeinen Verwendungsposition befindet.

11. Ballenwickelvorrichtung nach einem der Ansprüche 2 bis 10, **dadurch gekennzeichnet, dass** die Form der Stützfläche (30) in Längsrichtung der Stützschiene (16a, 16b) nicht gerade ist.

12. Ballenwickelvorrichtung nach Anspruch 11, **dadurch gekennzeichnet, dass** die Stützfläche (30) einen Abschnitt aufweist, der im Wesentlichen die gleiche Form wie die Form des Bewegungsweges des zweiten Endes der Schwinge (26a, 26b) aufweist.

13. Ballenwickelvorrichtung nach einem der Ansprüche 5 bis 10, **dadurch gekennzeichnet, dass** ihr Wickeltisch (24) ferner zweite Stützelemente (29) aufweist, mit deren Hilfe der Wickeltisch (24) auf den Stützschienen (16a, 16b) gestützt wird, in Längsrichtung der Stützschienen beweglich zu sein, wobei die zweiten Stützelemente (29) Stützräder umfassen, die sich entlang der Stützfläche (30) der Stützschiene (16a, 16b) bewegen.

14. Ballenwickelvorrichtung nach Anspruch 13, **dadurch gekennzeichnet, dass** sich an der Vorderkante (18) des Wickeltisches (24) ein Drehstift (25) befindet, und es einen länglichen Schlitz (33) am zweiten Ende der Schwinge (26a, 26b) gibt, die an dem Wickeltisch (24) angebracht ist, in dem der Drehstift (25) zum Bewegen angebracht ist.

15. Ballenwickelvorrichtung nach Anspruch 14, **dadurch gekennzeichnet, dass** der Schlitz (33) ein erstes Ende und ein zweites Ende aufweist, so dass das erste Ende in vertikaler Richtung niedriger ist als das zweite Ende, wenn sich die Schwinge (26a, 26b) in der zweiten Position befindet.

16. Ballenwickelvorrichtung nach Anspruch 14 oder 15, **dadurch gekennzeichnet, dass** der Schlitz (33) eine gekrümmte Form aufweist.

17. Kombinationsmaschine, die eine Ballenkammer (60) zum Formen eines Ballens (100) und eine Ballenwickelvorrichtung zum Wickeln einer Schutzfolie um den geformten Ballen (100) umfasst, **dadurch gekennzeichnet, dass** die Ballenwickelvorrichtung eine Ballenwickelvorrichtung gemäß den Ansprüchen 1 bis 16 ist.

## Revendications

1. Enrubanneuse, qui a un châssis, une table d'enrubannage (24) qui est mobile par rapport au châssis, laquelle table d'enrubannage (24) a un bord avant (18) et un bord arrière (20), sur lequel bord arrière une balle enrubannée (100) est agencée pour rouler hors de la table d'enrubannage, et lequel châssis comprend au moins un rail de support (16a, 16b), qui a une direction longitudinale, et la table d'enrubannage (14) a des premiers éléments de support (28), avec lesquels la table d'enrubannage (24) est supportée sur ledit rail de support (16a, 16b) pour être mobile dans la direction longitudinale du rail de support, un poste de réception (12), auquel la table d'enrubannage (24) peut être déplacée pour recevoir une balle (100), un poste d'enrubannage (14), auquel la table d'enrubannage (24) peut être déplacée pendant la durée de l'enrubannage d'un film protecteur, un actionneur configuré pour déplacer la table d'enrubannage (24) entre le poste de réception (12) et le poste d'enrubannage (14) et un dispositif d'enrubannage (50) configuré pour enrubanner un film protecteur autour de la balle (100), **caractérisée en ce que** ladite table d'enrubannage (24) est supportée par son bord avant (18) sur le châssis avec au moins un balancier (26a, 26b).

2. Enrubanneuse selon la revendication 1, **caractérisée en ce que** le rail de support (16a, 16b) a une surface de support (30) sensiblement dans la direction longitudinale du rail de support (16a, 16b) et les premiers éléments de support (28) comprennent des roues de support se déplaçant le long de la surface de support (30) du rail de support (16a, 16b).

3. Enrubanneuse selon la revendication 1 ou 2, **caractérisée en ce qu'**elle comprend deux balanciers parallèles (26a, 26b) et la table d'enrubannage (24) est fixée de manière articulée au premier balancier (26a) et au second balancier (26b).

4. Enrubanneuse selon l'une quelconque des revendications 1 à 3, **caractérisée en ce que** les balanciers (26a, 26b) sont des pièces en forme de L, qui ont une première extrémité se fixant au châssis (10) et une seconde extrémité se fixant à la table d'enrubannage (24).

5. Enrubanneuse selon l'une quelconque des revendications 1 à 4, **caractérisée en ce qu'**elle comprend deux rails de support parallèles (16a, 16b) et la table d'enrubannage (24) a un premier bord latéral, par lequel elle est supportée sur le premier rail de support (16a), et un second bord latéral, par lequel elle est supportée sur le second rail de support (16b).

6. Enrubanneuse selon l'une quelconque des revendications 1 à 5, **caractérisée en ce que** les premiers éléments de support (28) sont entre le bord avant (18) et le bord arrière (20), à une distance du bord arrière (20).

7. Enrubanneuse selon l'une quelconque des revendications 1 à 6, **caractérisée en ce que** ledit actionneur configuré pour déplacer la table d'enrubannage (24) entre le poste de réception (12) et le poste d'enrubannage (14) est agencé pour faire tourner les balanciers (26a, 26b).

8. Enrubanneuse selon la revendication 7, **caractérisée en ce que** ledit actionneur est un vérin hydraulique (42), qui est fixé par sa première extrémité au châssis (10) et par sa seconde extrémité au balancier (26a, 26b).

9. Enrubanneuse selon les revendications 1 à 8, **caractérisée en ce que** les balanciers (26a, 26b) peuvent être amenés dans une première position, la table d'enrubannage (24) se trouvant au niveau du poste de réception (12), et dans une seconde position, la table d'enrubannage (24) se trouvant au niveau du poste d'emballage (14).

10. Enrubanneuse selon l'une quelconque des revendications 1 à 9, **caractérisée en ce que** la table d'enrubannage (24) peut être amenée dans une position de déchargement, où le bord avant (18) de la table d'enrubannage (24) est dans la direction verticale sensiblement plus haut que le bord arrière (20), lorsque l'enrubanneuse est dans la position d'utilisation courante.

11. Enrubanneuse selon l'une quelconque des revendications 2 à 10, **caractérisée en ce que** la forme de la surface de support (30) dans la direction longitudinale du rail de support (16a, 16b) n'est pas rectiligne.

12. Enrubanneuse selon la revendication 11, **caractérisée en ce que** ladite surface de support (30) comprend une section, qui a sensiblement la même forme que la forme de la trajectoire de mouvement de la seconde extrémité du balancier (26a, 26b).

13. Enrubanneuse selon l'une quelconque des revendications 5 à 10, **caractérisée en ce que** sa table d'enrubannage (24) a en outre des seconds éléments de support (29), au moyen desquels la table d'enrubannage (24) est supportée sur lesdits rails de support (16a, 16b) pour être mobile dans la direction longitudinale des rails de support, lesquels seconds éléments de support (29) comprennent des roues de support se déplaçant le long de la surface de support (30) du rail de support (16a, 16b).

14. Enrubanneuse selon la revendication 13, **caractérisée en ce qu'**il existe un axe de pivotement (25) dans le bord avant (18) de la table d'enrubannage (24), et **en ce qu'**il existe une fente allongée (33) dans la seconde extrémité du balancier (26a, 26b) fixée à la table d'enrubannage (24), dans laquelle fente l'axe de pivotement (25) est adapté pour se déplacer.

15. Enrubanneuse selon la revendication 14, **caractérisée en ce que** la fente (33) a une première extrémité et une seconde extrémité, de sorte que la première extrémité est dans la direction verticale plus basse que la seconde extrémité, lorsque le balancier (26a, 26b) est dans la seconde position.

16. Enrubanneuse selon la revendication 14 ou 15, **caractérisée en ce que** la fente (33) a une forme courbe.

17. Machine combinée, qui comprend une chambre de mise en balles (60) pour former une balle (100) et une enrubanneuse pour enrubanner un film protecteur autour de la balle formée (100), **caractérisée en ce que** l'enrubanneuse est une enrubanneuse selon les revendications 1 à 16.
